# EUROPEAN PATENT SPECIFICATION

(11) **EP 0 625 243 B1**
(45) Date of publication and mention of the grant of the patent: **16.04.1997**
(21) Application number: 93905033.2
(22) Date of filing: 03.02.1993
(51) Int. Cl.: F02B 53/08, F02G 3/00, F01C 11/00, F02B 53/02

(54) **ROTARY ENGINE**
ROTIERENDE BRENNKRAFTMASCHINE
MOTEUR ROTATIF

(30) Priority: 05.02.1992 US 831425
(43) Date of publication of application: 23.11.1994
(73) Proprietor: RINEY, Ross, W., Lucas, TX 75002 (US)
(72) Inventor: RINEY, Ross, W., Lucas, TX 75002 (US)
(74) Representative: Harris, Ian Richard
(86) International application number: US9301268
(87) International publication number: WO9316273

(56) References cited:
- DE-C- 726 275
- DE-C- 817 058
- DE-C- 822 312
- GB-A- 796 601
- GB-A- 1 531 541
- US-A- 4 739 615
- US-A- 4 848 295

## Description

This invention relates generally to internal combustion engines, and in particular to rotary engines.

Needs for more efficient and powerful internal combustion engines are ever present. Rotary engines have proven to be important alternatives to conventional piston-type engines.

The efficiency of an engine is based in part on whether it makes full use of the energy available from the expansion of combusted gases. Limitations in the size of the available volume for gas expansion during combustion has been a problem in making full use of the energy available from the combustion of gases in existing rotary engines. Accordingly, one efficiency limitation results when exhaust occurs before the combusted gases have completely expanded, i.e., before the power stroke has completed.

Therefore, a need has arisen for a rotary engine that, through the efficient use of space in a same engine, provides a relatively large volume for gas expansion to take advantage of the available energy from the combustion of gases.

Patent specification US-A-4 739 615 discloses an internal combustion engine with a reciprocating suction piston and reciprocating power piston cooperating with rotating combustion chambers which receive compressed air and fuel from the cylinder of the suction piston and, after complete combustion, discharge into the cylinder of the power piston.

Patent specification GB-A-1 531 541 discloses a rotary internal combustion engine with a cylindrical rotor having two spaced circumferentially extending grooves with contact valves which divide up the grooves into induction and compression chambers and expansion and exhaust chambers respectively.

Patent specification DE-A-822312 discloses an internal combustion chamber with twin eccentrics forming separate compression and power chambers and with a common crossover chamber.

According to the invention there is provided a rotary engine, comprising:
a housing having two ends and having a bore extending therethrough;
a rotor including a compression eccentric and a power eccentric, the eccentrics being spaced apart and the rotor being housed within the bore in the housing and including an axial shaft;
an intake manifold aligned with the compression eccentric and operable to convey gases into a compression space formed between the housing, the compression eccentric, and a compression gate, the compression gate being disposed adjacent to the compression eccentric and means being provided for maintaining the compression gate in sealing contact with the compression eccentric, such that a compression stroke can occur in the compression space;
a rotating combustion chamber unit in communication with the eccentrics and comprising two combustion chambers, each of which is operable to transfer gases from the compression eccentric to the power eccentric;
an ignition device coupled to the rotating combustion chamber unit and operable to ignite gases in the combustion chambers;
a power gate disposed adjacent to the power eccentric and means for maintaining the power gate in sealing contact with the power eccentric; and
an exhaust port aligned with the power eccentric, such that a power stroke occurs in the space formed by the housing, the power eccentric and the power gate.

Thus, a rotary engine is provided which comprises a rotor housed within a housing. The rotor comprises a compression eccentric and a power eccentric spaced apart from each other. Gases are conveyed into the housing through an intake manifold. Gases are compressed in the spaced formed by the housing, the compression eccentric, and a compression gate that remains in contact with the compression eccentric at all times. A rotating combustion chamber transfers gases from the compression eccentric to the power eccentric. During this transfer, an ignition device ignites gases in the rotating combustion chamber before they are transferred to the power eccentric. These ignited gases expand in the space formed by the power eccentric, the housing, and a power gate that is in contact with the power eccentric at all times. Gases exit the power eccentric through an exhaust port aligned with the power eccentric.

A substantial portion of the available energy from combusting gases can be utilized before exhaust.

The invention is diagrammatically illustrated by way of example in the accompanying drawings, in which:
Figure 1 is an exploded view of a rotary engine according to the invention;
Figures 2a and 2b are top and bottom schematic illustrations of a rotating combustion chamber of a rotary engine according to the invention;
Figures 3a to 6b are schematic cross-sectional views of the compression stroke in a rotary engine according to the invention; and
Figures 7a to 8b are schematic cross-sectional views illustrating the power stroke of a rotary engine according to the invention.

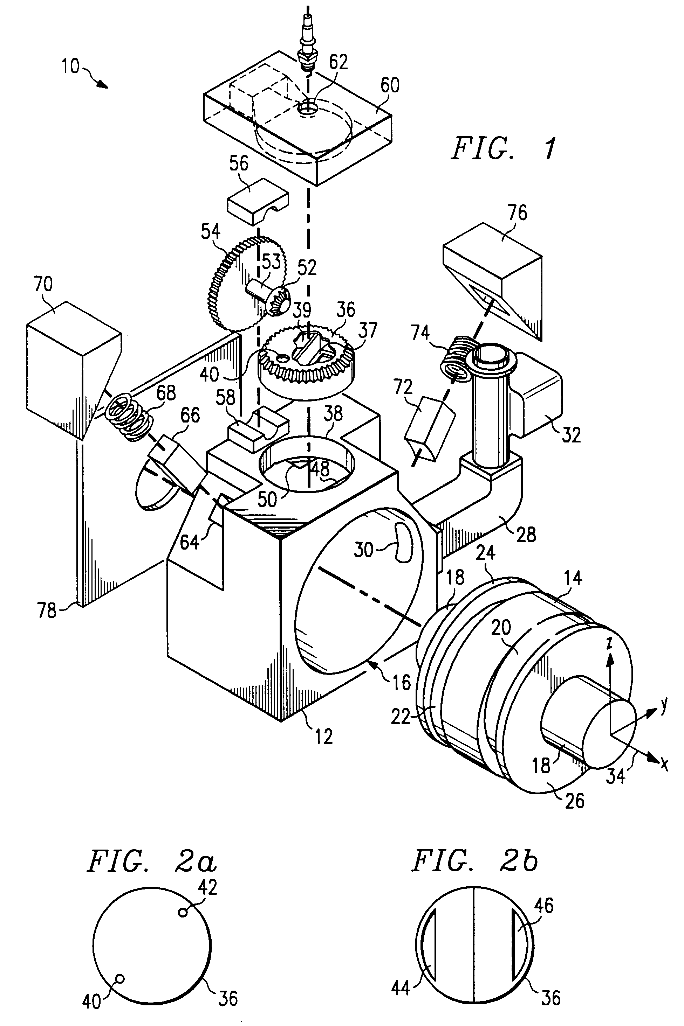

In the drawings, like reference characters are used fro like parts in the various figures and Figure 1 is an exploded view of a rotary engine, indicated generally at 10. In general, operation of the engine occurs within a housing or engine block 12. A rotor 14 rotates within a bore 16 of the housing 12. The rotor 14 may be rotatively supported within the housing 12 by separate bearings (not shown) or by closely controlling the tolerances between the exterior of the rotor 14 where it fits into the housing 12. The rotor 14 comprises a shaft 18 of a smaller diameter than the rotor 14 and extending concentrically outward from each end of the rotor 14. Useful advantage of the rotary engine 10 may be gained by mechanical connection of various systems to the shaft 18. For example, the rotation of the shaft 18 may be used to power an automobile.

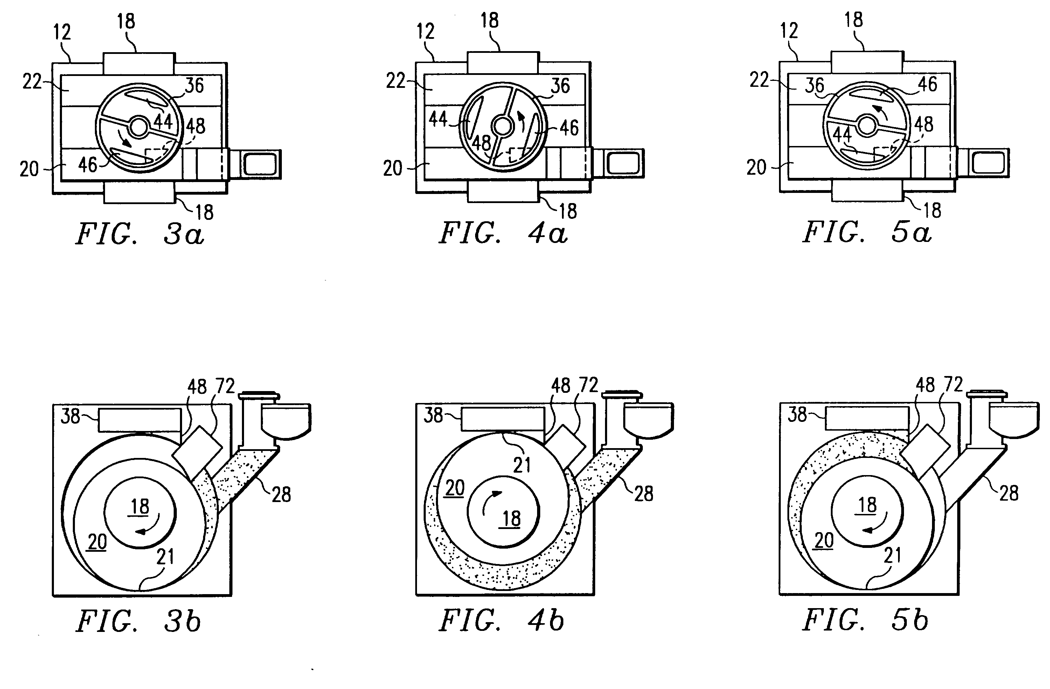

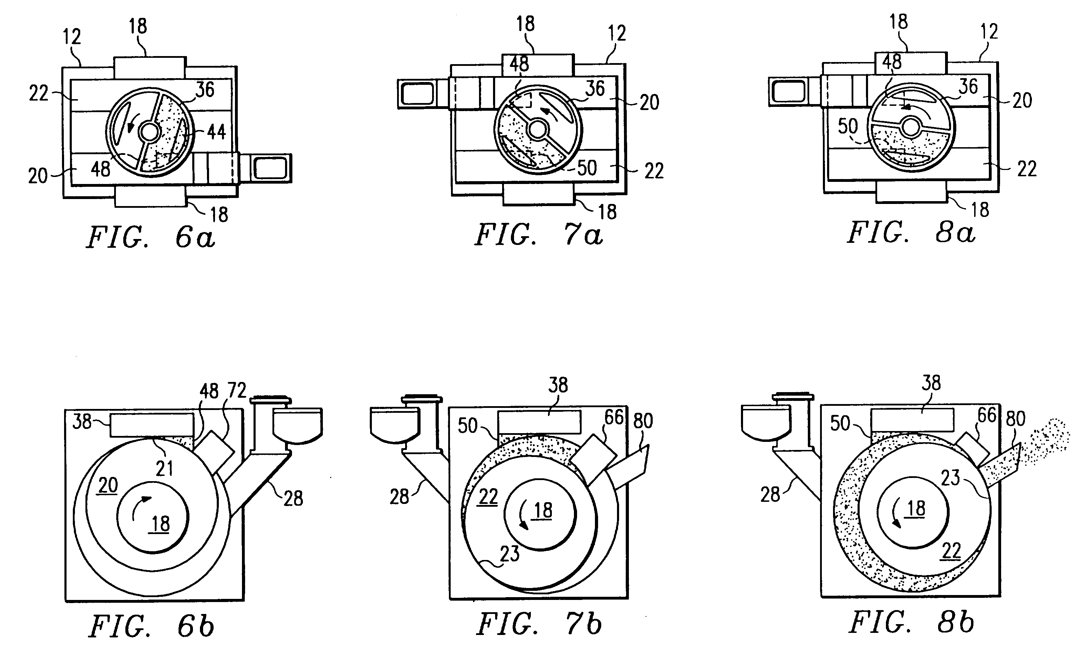

The rotor 14 also comprises a compression eccentric 20 and a power eccentric 22 formed in the rotor 14. Each of these eccentrics is of a diameter smaller than the outer periphery of the rotor 14 and is tangential to the rotor 14 (the eccentric 20 is tangent at a tangential point 21, and the eccentric 22 is tangent at a tangential point 23, as shown in Figures 3b and 7b, respectively). Furthermore, the eccentrics 20 and 22 are 180 degrees out of phase, such that 180 degrees separates the tangential point 21 from the tangential point 23.

Two annular seals 24 and 26 are located on the periphery of the rotor 14 to seal pressures generated by compression and power strokes within the housing 12. A seal between the housing 12 and the rotor 14 is formed by closely held tolerances or a separate annular seal (not shown) can be used on the rotor 14 between the eccentrics 20 and 22 to seal the pressure across the rotor 14 between the eccentrics 20 and 22.

An intake manifold 28 is connected to the housing 12 to allow gases (such as an air/fuel mixture) into the housing 12 through a bore 30. Gases entering through the intake manifold 28 may come from, for example, a fuel injector or a carburetor system 32. The bore 30 is aligned in the x-direction 34 with the compression eccentric 20, and has a width in the x-direction 34 less than the width of the eccentric 20. The orientation of the direction axis 34 is illustrated in Figure 1.

A rotating combustion chamber unit 36 rotates within a bore 38 in the housing 12. A shown by the cutaway view of the rotating combustion chamber unit 36, it is divided into two distinct D-shaped chambers 37 and 39.

Figures 2a and 2b show top and bottom views of the rotating combustion chamber unit 36. As shown in Figure 2a, two ignition apertures 40 and 42 are formed in the top of the rotating combustion chamber unit 36. An ignition device, such as a spark plug 47 (see Figure 1), ignites gases in each of the chambers 37 and 39 of the rotating combustion chamber unit 36 through the appropriate ignition aperture 40 or 42. A D-shaped slot is formed in the bottom of each of the two chambers of the rotating combustion chamber unit 36 as shown in Figures 2b, shown by references 44 and 46. The length of the slots 44 and 46 must be less than the distance between the compression eccentric 20 and the power eccentric 22, to ensure isolation of the pressures in those eccentrics.

In operation, the rotating combustion chamber unit 36 transfers gases compressed in the compression eccentric 20 to the power eccentric 22. Gases enter and exit the chambers of the rotating combustion chamber unit 36 through the D-shaped slots 44 and 46. Gases exit the compression eccentric 20 through a slot 48 (see Figure 1) formed from the bottom of the bore 38 in the housing 12 into the bore 16. The slot 48 is narrower in the x-direction 34 than the eccentric 20 is in the x-direction 34. Gases are transferred to the power eccentric 22 from the rotating combustion chamber unit 36 through a slot 50. The slot 50 is formed in the housing 12 to permit gas flow from the bore 38 through the housing 12 into the bore 16. The slot 50 is narrower in the x-direction 34 than is the power eccentric 22.

The rotating combustion chamber unit 36 rotates at one-half the speed of the rotor 14, and is driven by a bevel gear 52 mounted on a shaft 53. The shaft 53 also carries a gear 54, which is driven by the shaft 18. A bearing mounted on the housing 12 includes a top half or cap 56 and a bottom half 58 that supports the shaft 53 for rotation between the gear 54 and the bevel gear 52.

A combustion chamber head 60 is affixed to the housing 12 and houses the rotating combustion chamber unit 36 and the drive assembly. An aperture 62 is formed in the combustion chamber head 60 to receive the spark plug 47.

An opening 64 extends radially through the housing 12 to the bore 16 in the same position in the x-direction 34 as power eccentric 22. The width of the opening 64 in the x-direction 34 is less than the width of the power eccentric 22 in the x-direction 34.

A power gate or seal 66 projects through the opening 64 and contacts the surface of the eccentric 22. The surface of the power gate 66 that is in contact with the eccentric 22 is contoured so as to match the surface of the power eccentric at the time of power release, as will be described below. The power gate 66 is urged toward constant sliding contact with the power eccentric 22 through use of a spring 68, although other forces, such as hydraulic, pneumatic or electrical forces, could be used to perform the function of the spring 68. The spring 68 in turn in mounted in a housing 70, which encloses the spring 68 and the power gate 66.

A compression gate opening similar to the aperture 64 (not shown in Figure 1) extends radially through the housing 12 into the bore 16 to receive a compression gate or seal 72. The compression gate opening and the compression gate 72 are aligned with the compression eccentric 20. The compression gate 72 is located through the housing 12 in the same position in the x-direction 34 as the compression eccentric 20. The width of the unshown opening and the compression gate 72 in the x-direction 34 is less than that of the eccentric 20 in the x-direction 34. The surface of the compression gate 72 in contact with the eccentric 20 is contoured so as to match the surface of the eccentric 20 during full compression, as will be discussed below. The compression gate 72 is urged toward sliding contact with the eccentric 20 by a spring 74, which in turn is mounted in a housing 76. The housing 76 houses the compression gate 72 and the spring 74.

Two housing end plates 78 (only one shown in Figure 1) are coupled to the ends of the housing 12 to seal the housing 12. Bearings (not shown) can be provided between the end plates 78 and the shaft 18, which extends there through, if desired.

The operation of the rotary engine 10 will be best understood by reference to Figures 3a to 8b. Figures 3a to 6b illustrate the compression stroke of the rotary engine 10. In these figures, the rotor 14 rotates in a clockwise direction. Referring to Figure 3b, gases (for example, an air/fuel mixture) enter the housing 12 through the intake manifold 28. As the eccentric 20 rotates a space having a varying volume is created by the surfaces of the eccentric 20, the housing 12 and the compression gate 72. As shown in Figure 4b, the eccentric 20 has rotated such that complete intake has occurred. In Figures 3b and 4b, intake gases are represented by stippling.

Figure 5b represents the position of the eccentric 20 as compression begins. In Figure 5b, the tangential point 21 of the eccentric 20 has rotated past the intake manifold, thereby trapping the gases in the space with varying volume formed by the side of the compression gate 72 nearest the slot 48, the eccentric 20 and the housing 12. As the eccentric 20 continues its rotation, as shown in Figure 6b, the gases are completely compressed when the tangential point 21 of the eccentric 20 nears the compression gate 72. As shown in Figure 6b, the compression gate 72 is in full contact with the eccentric 20.

While the rotor 14 and the compression eccentric 20 are rotating, the rotating combustion chamber unit 36 also rotates as shown in Figures 3a, 4a, 5a, and 6a. As the rotary combustion chamber unit 36 rotates, the D-shaped slot 44 passes over the slot 48 allowing compressed intake gases to enter into one of the chambers of the rotating combustion chamber unit 36, as shown in Figure 5a. As the rotating combustion chamber unit 36 continues its rotation, the D-shaped slot 44 continues to move and completely passes over the slot 48, thereby completely receiving all of the compressed gas from the compression eccentric 20. This compressed gas is then ignited by the plug 47 as the ignition aperture 40 passes under the aperture 62. As the rotating combustion chamber unit 36 continues its rotation, the ignited gases are directed to the power eccentric side of the rotor 14 as shown in figures 7a, 7b, 8a and 8b. Figures 7a, 7b, 8a and 8b are "back" views with respect to Figures 3a-6b, such that the Figures have been rotated 180°.

As the D-shaped slot 44 passes over the slot 50, the ignited gases expand into the variable volume space formed by the power gate 66, the eccentric 22 and the housing 12. These combusting and expanding gases impart energy to the eccentric 22, thereby causing rotation. As the eccentric 22 and the rotor 14 rotate, the combusted gases are released through an exhaust port 80 as shown in Figure 8b, the stippling indicating exhaust though exhaust port 80 when the tangential point 23 passes the exhaust port 80.

Because the variable volume space formed by the power gate 66, the eccentric 22, and the housing 12 is relatively large, the efficiency of the rotary engine 10 is high. By using this relatively large space for gas expansion, the rotary engine 10 take advantage of much of the available energy from the expanding gases.

In summary, a rotary engine is provided that comprises a rotor having two out of phase eccentrics 20, 22, one 20 for compression and the other 22 for power. The rotating combustion chamber unit 36 transfers gases from the compression eccentric 20 to the power eccentric 22. These gases are ignited within the rotating combustion chamber unit 36 and the gases then expand into the space formed between the power eccentric 22, the housing 12, and the power gate 66 causing rotation of the rotor 14.

## Claims

1. A rotary engine, comprising:
a housing (12) having two ends and having a bore (16) extending therethrough;
a rotor (14) including a compression eccentric (20) and a power eccentric (22), the eccentrics (20,22) being spaced apart and the rotor (14) being housed within the bore (16) in the housing (12) and including an axial shaft (18);
an intake manifold (28) aligned with the compression eccentric (20) and operable to convey gases into a compression space formed between the housing (12), the compression eccentric (20), and a compression gate (72), the compression gate (72) being disposed adjacent to the compression eccentric (20) and means (74) being provided for maintaining the compression gate (72) in sealing contact with the compression eccentric (20), such that a compression stroke can occur in the compression space;
a rotating combustion chamber unit (36) in communication with the eccentrics (20,22) and comprising two combustion chambers (37,39), each of which is operable to transfer gases from the compression eccentric (20) to the power eccentric (22);
an ignition device (47) coupled to the rotating combustion chamber unit (36) and operable to ignite gases in the combustion chambers (37,39);
a power gate (66) disposed adjacent to the power eccentric (22) and means (68) for maintaining the power gate (66) in sealing contact with the power eccentric (22); and
an exhaust port (80) aligned with the power eccentric (22), such that a power stroke occurs in the space formed by the housing (12), the power eccentric (22) and the power gate (66).

2. A rotary engine according to claim 1, wherein:
the means for maintaining the compression gate (72) in sealing contact comprises spring means (74) biasing the compression gate (72) into contact with the compression eccentric (20); and
the means for maintaining the power gate (66) in sealing contact comprises spring means (68) biasing the power gate (22) into contact with the power eccentric (22).

3. A rotary engine according to claim 1, including means (52,54) operably connecting the shaft (18) to the rotating combustion chamber unit (36) whereby the rotating combustion chamber unit (36) rotates at one-half the rate of the rotor (14).

4. A rotary engine according to claim 3, wherein the means comprises a gearing mechanism (52,54).

5. A rotary engine according to claim 4, wherein the gearing mechanism further comprises:
a gear (54) coupled to the shaft (18);
a gear shaft (53) carrying the gear (54);
a bearing (56,58) rotatably supporting the gear shaft (53);
a bevel gear (52) mounted on the gear shaft (53) opposite the gear (54); and
a gear included in the rotating combustion chamber unit (36) and matingly engaging and being rotated by the bevel gear (52).

6. A rotary engine according to claim 1, wherein the rotating combustion chamber unit (36) includes two slots (44,46), each of the slots being associated with one of the chambers (37,39), such that gases from the compression eccentric (20) enter each chamber (37,39) through each chamber's associated slot (44,46) and exit each chamber (37,39) to the power eccentric (22) through each chamber's associated slot (44,46).

7. A rotary engine according to claim 1, wherein the compression and power eccentrics (20,22) are each tangent to the rotor at respective tangential points (21,23).

8. A rotary engine according to claim 7, wherein the respective tangential points (21,23) are 180° out of phase.

9. A rotary engine according to claim 1, including two ends plates (78) coupled to respective ends of the housing (12).

## Patentansprüche

1. Rotationsmotor mit:
einem Gehäuse (12), welches zwei Enden und eine durchgehende Bohrung (16) hat,
einem Rotor (14), welcher einen Kompressionsexzenter (20) und einen Arbeitsexzenter (22) hat, wobei die Exzenter (20, 22) voneinander beabstandet sind und der Rotor in der Bohrung (16) in dem Gehäuse (12) aufgenommen ist und eine axiale Welle (18) aufweist,
einem Einlaßsammler (28), der mit dem Kompressionsexzenter (20) ausgerichtet ist und so betreibbar ist, daß er Gase in einen Kompressionsraum transportiert, der zwischen dem Gehäuse (12), dem Kompressionsexzenter (20) und einem Kompressionsschieber (72) gebildet wird, wobei der Kompressionsschieber (72) an dem Kompressionsexzenter (20) angeordnet ist und Einrichtungen (74) vorgesehen sind, um den Kompressionsschieber (72) in abgedichtetem Kontakt mit dem Kompressionsexzenter (20) zu halten, so daß ein Kompressionshub in dem Kompressionsraum stattfinden kann,
einer rotierenden Verbrennungskammereinheit (36), welche in Verbindung mit den Exzentern steht und welche zwei Verbrennungskammern (37, 39) aufweist, die jeweils so betreibbar sind, daß sie Gase von dem Kompressionsexzenter (20) zu dem Arbeitsexzenter (22) übertragen,
einer Zündeinrichtung (47), welche mit der rotierenden Verbrennungskammereinheit (36) verbunden und so betreibbar ist, daß sie Gase in den Verbrennungskammern (37, 39) zündet,
einem Arbeitsschieber (66), der an dem Arbeitsexzenter (22) angeordnet ist und Einrichtungen (68), um den Arbeitsschieber (66) in dichtem Kontakt mit dem Arbeitsexzenter (22) zu halten, sowie
einem Abgasanschluß (80), der mit dem Arbeitsexzenter (22) ausgerichtet ist, so daß ein Arbeitshub in dem Raum auftritt, der durch das Gehäuse (12), den Arbeitsexzenter (22) und den Arbeitsschieber (66) gebildet wird.

2. Rotationsmotor nach Anspruch 1, wobei:
die Einrichtungen zum Halten der Kompressionsklappe bzw. des Kompressionsschiebers (72) in abgedichtetem Kontakt eine Federeinrichtung (74) aufweisen, welche die Kompressionsschieber (72) in Kontakt mit dem Kompressionsexzenter (20) drückt, und die Einrichtungen zum Halten des Arbeitsschiebers (66) in abgedichtetem Kontakt eine Federeinrichtung (68) aufweisen, welche den Arbeitsschieber (66) in Kontakt mit dem Arbeitsexzenter (22) vorspannt.

3. Rotationsmotor nach Anspruch 1, einschließlich Einrichtungen (52, 54), welche die Welle (18) wirksam mit der Rotationsverbrennungskammereinheit (36) verbinden, wobei die Rotationsverbrennungskammereinheit (36) sich halb so schnell dreht wie der Rotor (14).

4. Rotationsmotor nach Anspruch 3, wobei die Einrichtungen einen Getriebemechanismus (52, 54) aufweisen.

5. Rotationsmotor nach Anspruch 4, wobei der Getriebemechanismus weiterhin aufweist:
ein Zahnrad (54), welches mit der Welle (18) verbunden ist,
eine Zahnradwelle (53), welche das Zahnrad (54) trägt,
ein Lager (56, 58), welches die Zahnradwelle (52) drehbar haltert,
ein Kegelzahnrad (52), welches auf der Zahnradwelle (53) dem Zahnrad (54) entgegengesetzt liegend montiert ist, und
ein Zahnrad, welches in die Rotationsverbrennungskammereinheit (36) eingeschlossen ist und passend mit dem Kegelzahnrad (52) in Eingriff steht und von diesem gedreht wird.

6. Rotationsmotor nach Anspruch 1, wobei die Rotationsverbrennungskammereinheit (35) zwei Schlitze (44, 46) aufweist, wobei jeder der Schlitze einer der Kammern (37, 39) zugeordnet ist, so daß die Gase von dem Kompressionsexzenter (20) durch den jeder Kammer zugeordneten Schlitz (44, 46) in jede Kammer (37, 39) eintreten und aus jeder Kammer (37, 39) zu dem Arbeitsexzenter (22) durch jeden den Kammern zugeordneten Schlitz (44, 46) austreten.

7. Rotationsmotor nach Anspruch 1, wobei die Kompressions- und Arbeitsexzenter (20, 22) jeweils tangential zu dem Rotor bei entsprechenden Tangentenpunkten (21, 23) liegen.

8. Rotationsmotor nach Anspruch 7, wobei die jeweiligen Tangentialpunkte (21, 23) um 180° außer Phase liegen.

9. Rotationsmotor nach Anspruch 1, einschließlich zweier Endplatten (78), die an die entsprechenden Enden des Gehäuses (12) angeschlossen sind.

## Revendications

1. Moteur rotatif, comprenant :
un logement (12) doté de deux extrémités et présentant un orifice (16) se prolongeant au travers de celui-ci ;
un rotor (14) incluant un excentrique de compression (20) et un excentrique moteur (22), les excentriques (20, 22) étant à l'écart l'un de l'autre et le rotor (14) étant logé à l'intérieur de l'orifice (16) du logement (12) et comportant un arbre axial (18) ;
un collecteur d'admission (28) aligné avec l'excentrique de compression (20) et pouvant être commandé pour conduire les gaz dans un espace de compression formé entre le logement (1 2), l'excentrique de compression (20), et un obturateur de compression (72), l'obturateur de compression (72) étant disposé de manière adjacente à l'excentrique de compression (20) et un moyen (74) étant prévu pour maintenir l'obturateur de compression (72) en contact étanche avec l'excentrique de compression (20), de sorte qu'un temps de compression puisse avoir lieu dans l'espace de compression ;
une unité de chambre de combustion rotative (36) en communication avec les excentriques (20, 22) et comprenant deux chambres de combustion (37, 39), chacune d'elles pouvant être commandée pour transférer les gaz de l'excentrique de compression (20) à l'excentrique moteur (22) ;
un dispositif d'allumage (47) raccordé à l'unité de chambre de combustion rotative (36) et pouvant être commandé pour effectuer l'allumage des gaz des chambres de combustion (37, 39) ;
un obturateur moteur (66) disposé de manière adjacente à l'excentrique moteur (22) et un moyen (68) destiné à maintenir l'obturateur moteur (66) en contact étanche avec l'excentrique moteur (22) ; et
un accès pour l'échappement (80) aligné avec l'excentrique moteur (22), de sorte qu'un temps moteur se produise dans l'espace formé par le logement (12), l'excentrique moteur (22) et l'obturateur moteur (66).

2. Moteur rotatif selon la revendication 1, dans lequel :
le moyen de maintien de l'obturateur de compression (72) en contact étanche comprend un moyen ressort (74) sollicitant l'obturateur de compression (72) au contact de l'excentrique de compression (20) ; et
le moyen de maintien de l'obturateur moteur (66) en contact étanche comprend un moyen ressort (68) sollicitant l'obturateur moteur (22) au contact de l'excentrique moteur (22).

3. Moteur rotatif selon la revendication 1, incluant un moyen (52, 54) raccordant de manière fonctionnelle l'arbre (18) à l'unité de chambre de combustion rotative (36) ce par quoi l'unité de chambre de combustion rotative (36) tourne à la moitié de la vitesse du rotor (14).

4. Moteur rotatif selon la revendication 3, dans lequel le moyen comporte un mécanisme à engrenages (52, 54).

5. Moteur rotatif selon la revendication 4, dans lequel le mécanisme à engrenages comprend en outre :
un engrenage (54) accouplé à l'arbre (18);
un arbre d'engrenage (53) portant l'engrenage (54);
un palier (56, 58) supportant en rotation l'arbre d'engrenage (53) ;
un engrenage conique (52) monté sur l'arbre d'engrenage (53) à l'opposé de l'engrenage (54) ; et
un engrenage inclus dans l'unité de chambre de combustion rotative (36) et engrenant par accouplement et étant mis en rotation par l'engrenage conique (52).

6. Moteur rotatif selon la revendication 1, dans lequel l'unité de chambre de combustion rotative (36) inclut deux fentes (44, 46), chacune de ces fentes étant associée à une des chambres (37, 39), de sorte que les gaz de l'excentrique de compression (20) sont admis dans chacune des chambres (37, 39) par le biais de la fente associée de chaque chambre (44, 46) et sont évacués de chacune des chambres (37, 39) vers l'excentrique moteur (22) par le biais de la fente associée de chaque chambre (44, 46).

7. Moteur rotatif selon la revendication 1, dans lequel les excentriques de compression et moteur (20, 22) sont chacun tangent au rotor en des points tangentiels respectifs (21, 23).

8. Moteur rotatif selon la revendication 7, dans lequel les points tangentiels respectifs (21, 23) sont déphasés de 180°.

9. Moteur rotatif selon la revendication 1, incluant deux plaques d'extrémité (78) raccordées aux extrémité respectives du logement (12).
